# FASCICULE DE BREVET EUROPEEN

(11) **EP 0 717 934 B1**
(45) Date de publication et mention de la délivrance du brevet: **22.03.2000**
(21) Numéro de dépôt: 94120376.2
(22) Date de dépôt: 22.12.1994
(51) Int. Cl.: A23L 1/16

(54) **Pâte alimentaire torsadée à cuisson rapide**
Spiralförmige schnellkochende Teigware
Quick-cooking, twisted pasta

(43) Date de publication de la demande: 26.06.1996
(73) Titulaire: SOCIETE DES PRODUITS NESTLE S.A., 1800 Vevey (CH)
(72) Inventeur: Hauser, Thomas Wilhelm, CH-8057 Zürich (CH); Panattoni, Lorenzo, CH-8400 Winterthur (CH)
(74) Mandataire: Wavre, Claude-Alain

(56) Documents cités:
- US-A- 2 062 338

## Description

La présente invention a pour objet une nouvelle pâte alimentaire torsadée à cuisson rapide.

On connaît diverses pâtes alimentaires à cuisson rapide. EP 0450428 décrit ainsi un "spaghetti" pouvant être cuit en un temps minimum de 2 min, composé de trois lobes formant des rainures externes, lesdits lobes étant longitudinaux, parallèles et équidistants angulairement de 120°.

De même, EP 0557139 décrit des pâtes alimentaires longilignes et tubulaires pouvant être cuites dans des sachets perforés en 5 min, ces pâtes cuites ne s'agglomérant pas grâce à des striures prévues à leur surface.

La demande de brevet européen 94112910.8 (EP-A-697177) décrit également des pâtes alimentaires longilignes et tubulaires présentant des dents de dimensions particulières à la surface interne du tube, et capables d'être cuites en 5 min, ces pâtes cuites ne s'ovalisant pas et présentant une texture en bouche équivalente à celle de pâtes cuites traditionnelles du même type.

On connaît aussi une pâte alimentaire traditionnelle de type hélice qui a été commercialisée en Italie (Ghiottoli, De Cecco), cuisant en 10-12 min et présentant en coupe transversale la forme d'une hélice à 4 pales attachées à un axe creux, l'épaisseur de paroi dudit axe et desdites pales étant de l'ordre de 1,2-1,4 mm, et le diamètre du trou de l'axe étant de l'ordre de 1,5-2 mm. On peut noter que ce trou ne se referme pas au cours de la cuisson.

On connaît enfin US2062338 qui décrit une pâte alimentaire torsadée présentant en coupe transversale la forme d'une hélice à 3 pales et dont l'axe central est tubulaire. On peut noter que le trou de l'axe ne se referme manifestement pas au cours de la cuisson.

La présente invention a pour but de fournir une nouvelle pâte alimentaire du type hélice à cuisson rapide, lesdites pâtes pouvant être cuites en 5 min et présentant une texture en bouche équivalente à celle de pâtes traditionnelles du type hélice.

A cet effet, la pâte alimentaire torsadée à cuisson rapide selon l'invention, obtenue après extrusion puis séchage, présente en coupe transversale la forme d'une hélice comprenant au moins une pale attachée à un axe, et un axe tubulaire, l'axe présentant un trou d'un diamètre compris entre 0,5 et 1,3 mm, l'épaisseur de paroi de l'axe et des pales étant comprise entre 0,3 et 1,1 mm, et le degré de torsion étant tel qu'elle présente une une masse volumique comprise entre 0,2 et 0,7 g/cm³, le volume étant défini comme l'espace cylindrique occupé par la pâte.

Dans la suite de la description, on entend par "pâte traditionnelle du type hélice", une pâte alimentaire oblongue et torsadée, généralement cuite en 10 à 15 min, présentant en section transversale la forme d'une hélice comprenant au moins une paie attachée à un axe, lesdites pales étant torsadées autour de l'axe de la pâte, et l'épaisseur de paroi des pales et de l'axe étant généralement supérieure à 1,1 mm ("Die gute form", M. Götz et al., Museum für gestaltung Basel, 1991).

De même, le volume défini comme "l'espace cylindrique occupé par la pâte" peut être calculé en multipliant la longueur de la pâte par la surface du cercle délimité par les extrémités des pales en coupe transversale.

Enfin, la texture en bouche des pâtes cuites selon l'invention peut être définie, lors d'un test de dégustation par un échantillonnage de personnes, comme la sensation de fermeté en bouche de ces pâtes en comparaison de celle de pâtes traditionnelles du type hélice. Cette appréciation de la texture peut être également corrélée à la mesure de résistance à la coupe des pâtes selon l'invention par un analyseur de texture, comme l'analyseur Instron® (modèle 1011) équipé d'une cellule Kramer®, par exemple.

Les avantages du produit selon la présente invention, remarqués au cours des essais qui ont été effectués, sont les suivants:
- temps de cuisson d'environ 5 min selon la méthode traditionnelle (eau en ébullition), c'est à dire réduit de plus de 50% par rapport au temps nécessaire pour la cuisson d'une pâte traditionnelle du type hélice ayant le même nombre de pales;
- texture en bouche ayant un caractère consistant, rappelant fortement celui de pâtes traditionnelles du type hélice.
- capacité d'adsorber les condiments supérieure à celle de pâtes traditionnelles du type hélice, à cause de la présence du trou dans l'axe qui permet une meilleure pénétration des condiments.
- rigidité de la pâte cuite selon l'invention se rapprochant de celles de pâtes cuites traditionnelles du type hélice, due au fait que le trou de l'axe se ferme au cours de la cuisson.
- cuisson homogène des parois de l'axe et des pales donnant une texture en bouche également homogène.

Les pâtes selon la présente invention sont donc torsadées à un degré tel qu'elles présentent une masse volumique, telle que définie ci-dessus, comprise entre 0,2 et 0,7 g/cm³, de préférence entre 0,4 et 0,6 cm³. La masse volumique de la pâte selon l'invention est en fait relativement importante, c'est elle qui permet de conférer à la pâte cuite une texture en bouche équivalente de celle de pâtes traditionnelles du type hélice.

Cette masse volumique peut donc être corrélée au degré de torsion des pales, c'est à dire pour une pale donnée la distance qu'elle prend le long de l'axe pour effectuer 360°, soit un tour ou une spire. Ainsi, le degré de torsion des pales peut varier en fonction inverse du nombre et de la hauteur des pales. En effet, plus le nombre et la hauteur des pales sont grands, plus le degré de torsion peut être faible, car la quantité de pâte par unité de volume sera plus grande. De ce fait, une pâte selon l'invention présentant 4 pales ayant une hauteur à partir du centre de l'axe de la pâte de 7-9 mm, peut présenter un degré de torsion de l'ordre de 1 spire pour 1,6-1,8 cm le long de l'axe, de façon à ce que ladite pâte présente finalement une masse volumique comprise entre 0,2 et 0,7 g/cm³, par exemple.

Il faut toutefois noter que cette masse volumique peut dépendre aussi de l'épaisseur de paroi définie ci-après, et de la composition de la pâte qui est généralement standart. C'est pourquoi, elles peuvent ne constituer que des variables permettant de régler le degré de torsion des pales.

Les pâtes selon l'invention présentent aussi un axe tubulaire, ce qui est relativement important pour permettre une cuisson homogène des parois de l'axe et des pales. Cependant, on choisit un trou dans l'axe ayant un diamètre compris entre 0,5 et 1,3 mm, pour permettre une pénétration optimale de l'eau bouillante dans l'axe, et pour permettre également l'obturation complète du trou due au gonflement des parois de l'axe. En effet, un diamètre trop petit empêcherait l'eau de pénétrer dans l'axe et donc de cuire les parois de la pâte en 5 min. De plus, un diamètre trop grand empêcherait une obturation complète de l'axe au cours de la cuisson, ce qui est en fait important pour conférer une rigidité à la pâte, qui est particulièrement appréciée des consommateurs.

Il faut également noter que les extrémités des pâtes selon l'invention présentent un certain écrasement dû à la coupe effectuée généralement par un couteau rotatif lors de leur fabrication. De ce fait, le diamètre du trou de l'axe aux extrémités des pâtes selon l'invention peut varier au delà des valeurs susmentionnées.

Les parois de l'axe et des pales des pâtes selon l'invention présentent donc une épaisseur comprise entre 0,3 et 1,1 mm, voire entre 0,4 et 1 mm. Cependant, on peut recommander particulièrement une épaisseur de paroi de l'axe comprise entre 0,3 et 0,7 mm, et une épaisseur de paroi des pales comprise entre 0,6 et 1,1 mm, voire entre 0,8 et 1,1 mm, par exemple.

En outre, le rapport entre l'épaisseur de la paroi des pales et l'épaisseur de la paroi de l'axe peut jouer également un rôle non négligeable dans la sensation de texture en bouche de la pâte cuite selon l'invention. En effet, lorsque le trou de l'axe de la pâte se ferme au cours de la cuisson, l'épaisseur de la paroi de l'axe ressentie sous la dent augmente. Si l'on veut donc que la fermeté de paroi des pales et de l'axe de la pâte cuite soient comparables, ce qui est apprécié par le consommateur, il est préférable que le rapport "p/a" entre l'épaisseur "p" de la paroi des pales et l'épaisseur "a" de la paroi de l'axe, soit compris entre 1,2 et 2, voire entre 1,3 et 1,6.

Finalement, les pâtes selon la présente invention peuvent être fabriquées à l'aide de moyens de production déjà connus par l'homme du métier, et être ensuite commercialisées dans les gammes de pâtes du type hélice.

En particulier, pour fabriquer les pâtes selon la présente invention, on peut mélanger de la semoule de blé, notamment de l'espèce Triticum durum et Triticum aestivum, à de l'eau jusqu'à une teneur en eau de 25-35%, dans un mélangeur traditionnel, par exemple. On peut ensuite malaxer le mélange pendant 10 à 15 min à une température de 30 à 35°C. De préférence, dans les 5 à 8 dernières minutes du malaxage, on diminue la pression absolue de l'air du mélangeur par une aspiration par le vide jusqu'à 30 à 130 millibar, de manière à ôter les bulles d'air du mélange.

On peut introduire alors la pâte de céréale dans un extrudeur à une vis, par exemple, et extruder la pâte à une pression de 80 à 150 bar, tout en refroidissant le corps de l'extrudeuse par de l'eau pour que la température de la pâte ne dépasse pas 45 à 55°C, par exemple. Un couteau placé à la sortie de la filière peut ensuite couper la pâte extrudée en morceaux de pâte ayant une longueur comprise entre 0,5 cm et 20 cm, par exemple.

La forme des pâtes selon l'invention peut être obtenue en donnant aux orifices de la filière une forme correspondante à celle des pâtes selon l'invention, en tenant compte de la rétraction des pâtes lors de leur séchage subséquent.

Lesdits morceaux de pâte peuvent être séchés d'une manière classique jusqu'à ce qu'ils aient une teneur en eau comprise entre 10 et 13%, de préférence entre 11,4 et 12,3%, par exemple. On peut ensuite refroidir les pâtes sèches, qui présentent une température de l'ordre 60 à 82°C à la sortie du dispositif de séchage, jusqu'à une température ambiante de l'ordre 25°C, par exemple, puis les conditionner dans des sachets en plastique, par exemple.

La pâte alimentaire selon la présente invention est décrite ci-après en référence au dessin annexé, dans lequel,
- la figure 1 est une vue en perspective, à une échelle agrandie, d'une forme de réalisation de la pâte alimentaire présentant quatre pales.
- La figure 2 est une vue en coupe transversale, à une échelle agrandie 10 fois, de la pâte à quatre pales présentée à la figure 1.
- La figure 3 est une vue en coupe transversale, à une échelle agrandie 10 fois, d'une autre forme de réalisation de la pâte présentant trois pales.

### Exemple 1

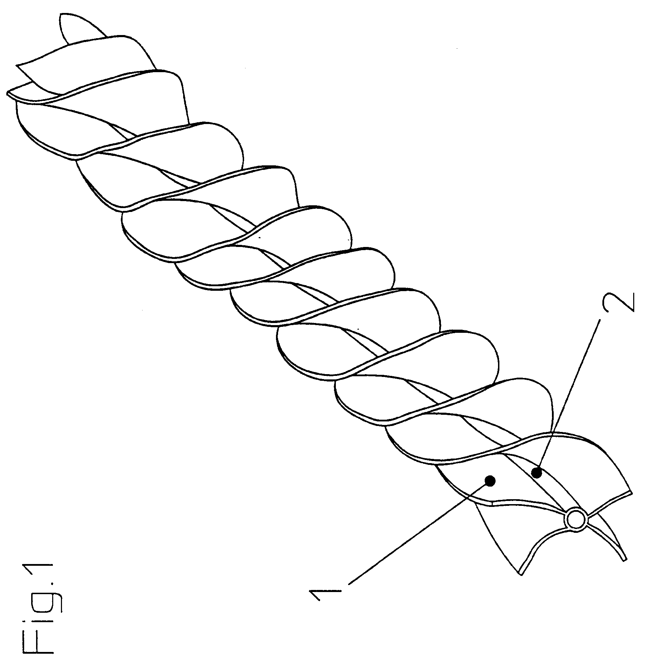

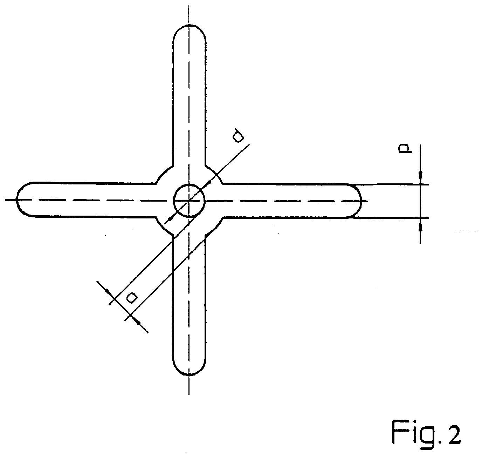

On fabrique avec des moyens de production traditionnels de l'homme du métier, des pâtes semblables à celles illustrées aux figures 1 et 2.

Comme on peut le remarquer sur la figure 1, ces pâtes présentent quatre pales "1" longitudinales, équiangulaires, et torsadées par rapport à l'axe tubulaire "2" de la pâte.

De plus comme décrit sur la figure 2, en section transversale l'épaisseur moyenne de la paroi des pales "p" est de 0,8 mm, l'épaisseur moyenne de la paroi de l'axe tubulaire " a" est de 0,5 mm, et le diamètre moyen "d" du trou de l'axe est de 0,7 mm.

Ces pâtes présentent en outre une longueur de 40 mm, des pales d'une hauteur moyenne à partir du centre de l'axe de 8 mm, et un degré de torsion de pales de l'ordre de 1 spire pour 1,7 cm le long de l'axe, de manière à ce que la masse volumique de la pâte, telle que définie ci-dessus, soit de l'ordre de 0,44 g/cm³.

Pour comparaison, on réalise des pâtes traditionnelles du type hélice à cuisson lente, ayant une longueur de 40 mm et présentant trois pales longitudinales, équiangulaires et torsadées par rapport à l'axe plein, l'épaisseur de la paroi desdites pales étant de l'ordre de 1,2 mm, leur hauteur étant de 8 mm, leur degré de torsion étant de l'ordre de 1 spire pour 2,2 cm le long de l'axe, et le diamètre dudit axe étant de 1,5 mm. Une telle pâte cuit dans les conditions décrites ci-après en 10 min.

On cuit ces deux types de pâtes dans de l'eau à franche ébullition avec adjonction de 10 g/l de sel, jusqu'à ce que l'on discerne encore dans la paroi des pales, à l'oeil nu, une partie interne blanche constituée d'amidon gélatinisé.

On détermine alors la fermeté des pâtes cuites ci-dessus, à une température de 65°C, par un analyseur de texture Instron® (modèle 1011) équipé d'une cellule Kramer® qui est animé d'une vitesse de coupe/cisaillement de 500 mm/min. Les résultats, exprimés en Newton, sont illustrés dans le tableau 1 ci-après.

**Tableau 1**

| Pâtes | Appareil Instron (Newton) |
|---|---|
| Selon l'invention | 682 |
| Traditionnelle à cuisson lente | 937 |

Comme on peut le voir dans le tableau ci-dessus, les pâtes selon l'invention ont une fermeté qui se rapproche nettement des pâtes traditionnelles à cuisson lente.

Le temps de cuisson des pâtes de l'invention, ainsi que l'appréciation de leur texture en bouche par un groupe de personnes lors d'un test de dégustation, sont illustrés dans le tableau 2 ci-après.

### Exemple 2

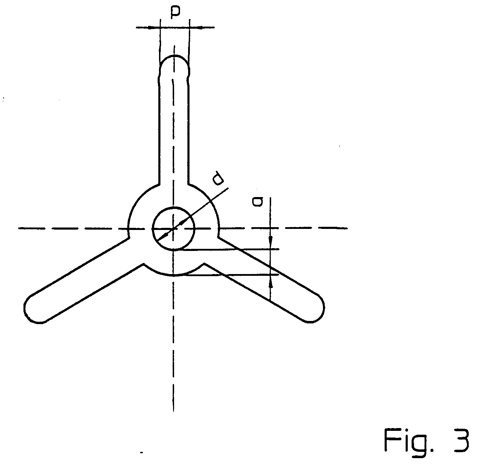

On fabrique avec des moyens de production traditionnels de l'homme du métier, des pâtes semblables à celles illustrées à la figure 3. Ces pâtes présentent trois pales longitudinales, équiangulaires, et torsadées par rapport à l'axe tubulaire de la pâte. L'épaisseur moyenne de la paroi des pales "p" est de 0,7 mm, l'épaisseur moyenne de la paroi de l'axe tubulaire " a" est de 0,6 mm, et le diamètre moyen "d" du trou de l'axe est de 1 mm.

Ces pâtes présentent en outre une longueur de 40 mm, des pales d'une hauteur moyenne de 8 mm, et un degré de torsion des pales de l'ordre de 1 spire pour 1,7 cm le long de l'axe de manière à ce que la masse volumique de la pâte, telle que définie ci-dessus, soit de l'ordre de 0,33 g/cm³.

On cuit ces pâtes comme décrit à l'exemple 1, puis on teste alors la qualité de leur texture en bouche par un groupe de personnes au cours d'un test de dégustation. Les résultats sont illustrés dans le tableau 2 ci-après.

### Exemple 3

On fabrique avec des moyens de production traditionnels de l'homme du métier, des pâtes semblables à celles illustrées à la figure 2 et décrites à l'exemple 1, à la différence qu'on les fabrique en accentuant le degré de torsion des pales jusqu'à environ 1 spire pour 1,4 cm le long de l'axe, de manière à ce que la masse volumique desdites pâtes soit de l'ordre de 0,51 g/cm³.

On les cuit comme décrit à l'exemple 1, puis l'on teste alors la qualité de leur texture en bouche par un groupe de personnes au cours du test de dégustation décrit ci-après.

L'appréciation de la texture en bouche des pâtes de l'invention des exemple 1, 2 et 3 est déterminée par un test gustatif auprès d'une trentaine de personnes. Les valeurs sont données en pourcentage de personnes ayant trouvé les pâtes selon l'invention similaires à celles de l'exemple comparatif correspondant (pâte traditionnelle du type hélice à cuisson lente décrite à l'exemple 1).

Les résultats des deux tests effectués sur les pâtes des exemples 1, 2 et 3, ainsi que leur temps de cuisson, sont illustrés dans le tableau 2 ci-après.

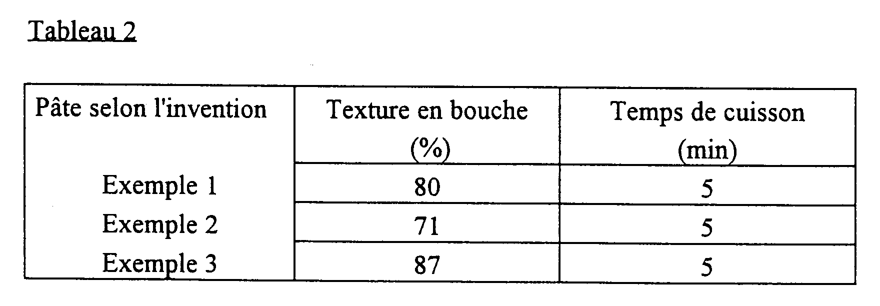

Comme on peut le voir les pâtes selon l'invention présentent une texture en bouche qui se rapproche nettement des pâtes traditionnelles à cuisson lente.

## Revendications

1. Pâte alimentaire torsadée à cuisson rapide, obtenue après extrusion puis séchage, présentant en coupe transversale la forme d'une hélice comprenant au moins une pale attachée à un axe, et un axe tubulaire,
l'axe présentant un trou d'un diamètre compris entre 0,5 et 1,3 mm,
l'épaisseur de paroi de l'axe et des pales étant comprise entre 0,3 et 1,1 mm, et
la pâte alimentaire étant torsadée à un degré tel qu'elle présente une masse volumique comprise entre 0,2 et 0,7 g/cm³, le volume étant défini comme l'espace cylindrique occupé par la pâte.

2. Pâte alimentaire selon la revendication 1, caractérisée en ce qu'elle présente une masse volumique telle que définie ci-dessus comprise entre 0,4 et 0,6 g/cm³.

3. Pâte alimentaire selon la revendication 1, caractérisée en ce que le rapport entre l'épaisseur de la paroi des pales et l'épaisseur de la paroi de l'axe est comprise entre 1,2 et 2.

4. Pâte alimentaire selon la revendication 1, caractérisée en ce que l'épaisseur de la paroi de l'axe est comprise entre 0,3 et 0,7 mm et que l'épaisseur de la paroi des pales est comprise entre 0,6 et 1,1 mm.

## Claims

1. Quick-cooking twisted pasta, obtained following extrusion and then drying, having a cross section in the form of a helix comprising at least one blade attached to a shaft, and a tubular shaft,
the shaft having a hole with a diameter of between 0.5 and 1.3 mm,
the thickness of the wall of the shaft and of the blades being between 0.3 and 1.1 mm, and
the pasta being twisted to a degree such that is has a density of between 0.2 and 0.7 g/m³, the volume being defined as the cylindrical space occupied by the pasta.

2. Pasta according to claim 1, characterized in that it has a density as defined above of between 0.4 and 0.6 g/cm³.

3. Pasta according to claim 1, characterized in that the ratio between the thickness of the wall of the blades and the thickness of the wall of the shaft is between 1.2 and 2.

4. Pasta according to claim 1, characterized in that the thickness of the wall of the shaft is between 0.3 and 0.7 mm and that the thickness of the wall of the blades is between 0.6 and 1.1 mm.

## Patentansprüche

1. Schnellkochende verdrillte Teigware, die durch Extrusion und nachfolgende Trocknung erhalten wird, die einen Querschnitt in Form einer Wendel aufweist, die wenigstens ein an eine Achse angefügtes Blatt sowie eine rohrförmige Achse aufweist,
wobei die Achse ein Loch mit einem Durchmesser von 0,5 bis 1,3 mm aufweist, die Dicke der Wand der Achse und der Blätter zwischen 0,3 und 1,1 mm liegt und die Teigware so verdrillt ist, daß sie eine Volumenmasse zwischen 0,2 und 0,7 g/cm³ aufweist, wobei das Volumen als der zylindrische Raum definiert ist, der von der Teigware eingenommen wird.

2. Teigware nach Anspruch 1, dadurch gekennzeichnet, daß sie eine wie oben definierte Volumenmasse aufweist, die zwischen 0,4 und 0,6 g/cm³ liegt.

3. Teigware nach Anspruch 1, dadurch gekennzeichnet, daß das Verhältnis der Wanddicke der Blätter zur Wanddicke der Achse zwischen 1,2 und 2 liegt.

4. Teigware nach Anspruch 1, dadurch gekennzeichnet, daß die Wanddicke der Achse zwischen 0,3 und 0,7 mm liegt und die Wanddicke der Blätter zwischen 0,6 und 1,1 mm liegt.
